# EUROPEAN PATENT SPECIFICATION

(11) **EP 3 411 456 B1**
(45) Date of publication and mention of the grant of the patent: **06.11.2019**
(21) Application number: 17704552.3
(22) Date of filing: 30.01.2017
(51) Int. Cl.: C09K 19/54, B32B 17/00, C03C 17/00, E06B 3/00, G02F 1/00, B32B 17/10

(54) **POLYMER DISPERSED LIQUID CRYSTAL GLASS CONSTRUCTION**
POLYMERDISPERGIERTE FLÜSSIGKRISTALLGLASKONSTRUKTION
CONSTRUCTION DE VITRES À CRISTAUX LIQUIDES DISPERSÉS DANS UN POLYMÈRE

(30) Priority: 01.02.2016 US 201662289668 P; 05.01.2017 US 201762442504 P
(43) Date of publication of application: 12.12.2018
(73) Proprietor: Central Glass Company, Limited, Yamaguchi 755-0001 (JP)
(72) Inventor: BARD, Michael, Nashville Tennessee 37209 (US); SOL, Jean-Marc, Grevenmacher 6776 (LU)
(74) Representative: Mewburn Ellis LLP
(86) International application number: PCT/JP2017/003101
(87) International publication number: WO 2017/135182

(56) References cited:
- WO-A1-2012/154663
- WO-A1-2016/029075
- US-A1- 2009 115 922

## Description

### FIELD OF THE DISCLOSURE

The present disclosure is generally directed to polymer dispersed liquid crystal (PDLC) glass constructions, and methods for forming PDLC glass constructions, which are suitable for use in automotive applications. More specifically, the present disclosure is directed to PDLC automotive safety glass that is capable of meeting stringent automotive standards for safety and aesthetics, including, for example and without limitation, durability against direct heat, radiation, vibrations, road debris, contaminants, temperature swings, and impacts, and requirements for purchaser specifications. Disclosed exemplary embodiments are further directed to a PDLC automotive safety glass for achieving certain levels of total light transmission (LTa) and/or total energy transmission (TTS) through the PDLC safety glass.

### BACKGROUND OF THE DISCLOSURE

PDLC glass constructions are known layered glass structures that may be used, for example and without limitation, as architectural or vehicle windows or sunroofs capable of selectively switching between an opaque (OFF) state for blocking, e.g., visible light, infrared and/or ultraviolet energy, and/or providing privacy, a transparent (ON) state for providing visibility and the transmission of visible light and/or energy, and a partially transparent (ON) state for allowing some light to pass without being fully transparent. The switching function is accomplished by applying an electric field to a PDLC material or layer within the glass construction. When a PDLC material is subjected to an applied electric field, discrete formations, such as droplets of a liquid crystal(s) dispersed throughout a polymer matrix in the PDLC, assume a transparent state because the long molecular axes of the liquid crystals align in a nematic (parallel) orientation in the direction of the electric field. The parallel orientation provides a direction for light to pass.

Under the presence of an electric field less than that required to produce a full nematic orientation, the liquid crystals allow some light to pass, creating a partially transparent appearance in the PDLC. When the electric field is removed, the liquid crystals return to a random orientation which scatters light and produces an opaque state.

PDLC materials are typically formed by initiating polymerization of a monomer mixed with a liquid crystal(s) and then curing the polymer matrix, resulting in a phase separation of the liquid crystal into distinct domains throughout the rigid polymer backbone.

In a typical PDLC glass construction, the PDLC material is provided between two polymer films, such as polyethylene terephthalate (PET) films, which may be coated with a transparent conductive material, such as a transparent conductive oxide (TCO) between each polymer film and the PDLC material.

The PDLC film including the polymer films, transparent conductive materials, and any interlayers is contained between glass substrates on each side of the PDLC film.

For example, as used in this disclosure a "first glass substrate" may be a glass substrate having an outside surface that will be exposed to the outside of a vehicle when installed, while a "second glass substrate" may be a glass substrate having an inside surface that will be exposed to the passenger compartment of the vehicle when installed.

Application of an electric field to the PDLC material from a voltage source connected to the transparent conductive material switches the PDLC material from an OFF state to a fully or partially ON state.

Thus, PDLC glass is used, e.g., in architectural and transportation applications (e.g., automobiles, planes, trains, boats, etc.) where windows or walls switchable between an opaque state and a transparent state are desired. For example, an opaque state may be preferable for blocking light and/or heat during the daytime, and/or providing privacy. A transparent state may be preferable for visibility. PDLC glass constructions are capable of switching between OFF and ON states, and partially ON states, using known power supplies and switch mechanisms.

US2009/115922 describes switchable glazing, being windows, windshields and the like, including a PDLC layer stacked between other layers. Intermediate PVB or EVA layers may be disposed on the inside and outside of the PDLC film layer.

However, currently known PDLC glass constructions have several drawbacks, especially in automotive applications. For example, PDLC materials in the OFF state or partially ON state have an opaque appearance such as a whitish hue from opaque portions. When viewed from the outside of the automobile, the appearance of the opaque PDLC may be undesirable. When viewed from the inside (passenger compartment) of the vehicle, the aesthetic appearance may also be undesirable and may require a blind or shade to cover the undesirable appearance. The blind or shade may nonetheless be insufficient to reduce visibility of the opaque PDLC when viewed from the outside.

WO2012/154663 describes automotive glazing using a switchable film - such as an SPD layer or PDLC layer - sandwiched between first and second interlayers, which may be made of PVB or EVA, and clear glass inner and outer layers. An IR-reflecting layer e.g. of metal such as silver is interposed between the outer glass layer and the first (outer) interlayer. At certain regions of the periphery of the screen a black paint layer is interposed between the IR-reflector layer and the first interlayer. A further black paint layer may be applied over the inner face of the inner glass layer.

These PDLC glass constructions may not meet strict aesthetic requirements for particular automotive manufacturers' specifications. As a result, cost efficiency and manufacturing flexibility may be limited by a need for using particular PDLC materials to achieve acceptable PDLC glass construction products.

In addition, current PDLC glass constructions may not have sufficient reflective and/or absorbing properties and allow an undesirably high level of light and/or energy transmission through the glass construction. This is particularly harmful for automotive glass because vehicles are subjected to large temperature variations, high levels of direct sunlight, heat exposure, humidity, etc., which can affect the comfort of the vehicle and the integrity of the glass constructions, laminates, and PDLC materials. Here again, a blind or shade on the inside (passenger compartment) of the glass may be required to improve the comfort of the vehicle. The blind or shade may be insufficient to protect the integrity of the glass construction from the damaging effects of light and heat that strike the glass from the outside.

Moreover, any automotive safety glass must meet certain safety standards in the event of impacts from rocks, branches, debris, vibrations, other vehicles, etc. Thus, any automotive PDLC glass construction that is sufficient for controlling total light transmission (LTa) and/or total energy transmission (TTS) must also be sufficiently robust to safely withstand impacts and forces that may damage or dislodge an automotive glass.

Thus, a need exists for a PDLC glass that is suitable for automotive applications and addresses the drawbacks identified above.

### THE INVENTION

The invention as specified in claim 1 provides a glass construction comprising:
a first glass substrate layer;
a second glass substrate layer;
a polymer dispersed liquid crystal (PDLC) film layer between the first glass substrate layer and the second glass substrate layer, the PDLC film layer comprising
   a PDLC material layer,
   a first polymer film layer between the first glass substrate layer and the PDLC material layer, and
   a second polymer film layer between the second glass substrate layer and the PDLC material layer;
a first intermediate film layer between the first glass substrate layer and the PDLC film layer,
and
a second intermediate film layer between the second glass substrate layer and the PDLC film layer;
wherein at least one of the first glass substrate layer, the first intermediate film layer and the first polymer film layer is a darkened layer having a darkness for reducing the transmission of at least one of visible light and other energy, and
at least one of the second glass substrate layer, the second intermediate film layer and the second polymer film layer is a darkened layer having a darkness for reducing the transmission of visible light, optionally also other energy, to reduce the visibility of the PDLC material layer.

The glass construction may be an automotive laminated glass window (claim 11).

The invention is generally directed to a PDLC glass construction configured to, among other things, improve the aesthetic appearance of the glass construction by reducing visibility of an opaque PDLC material, for example a whitish hue, through the glass construction. In this respect, a darkened material and/or layer(s) may be provided on both sides of the PDLC material layer in the glass construction.

For purposes of this disclosure, including with reference to the figures, a "dark" or "darkened" material is a material that reduces the amount of visible light and/or energy transmission through the same or comparable material in a non-darkened state; a "side" of a PDLC material or layer is a surface or portion of the PDLC film upon which a glass substrate and/or an intermediate film layer are stacked; first and second intermediate film layers are adhered to a PDLC layer and a glass substrate layer, resulting in an integrated glass construction; a "first" glass substrate, a "top" glass substrate or an "outside glass" substrate will refer to a glass substrate forming the portion of a window or glass that is exposed to the exterior of, e.g., a building or automobile, and; "second" glass substrate, a "bottom" glass substrate, or "inside" glass substrate will refer to a glass substrate forming the portion of a window or glass that is exposed to the interior of, e.g., a building or automobile, for example a room in a building or the passenger compartment of an automobile.

A darkened material or layer on either side of the PDLC layer or PDLC material, at least on the second side, reduces visibility of opaque portions of the PDLC material, for example in the OFF state or partially ON state, improving the aesthetic appearance of the glass construction when the glass is viewed from the second glass substrate layer, optionally also from the first glass substrate layer. A darkened material may be, for example and without limitation, a material having a dark gray hue. At least one of the darkened substrates/layers may be either the top glass and/or any layer(s) between the top glass and the PDLC material. At least one of the darkened substrates/layers is either the bottom glass and/or an interlayer between the PDLC material and the bottom glass. Thus, the glass construction reduces the visibility of the PDLC film viewed through the inside, optionally also the outside, of the glass construction and meets automotive PDLC glass aesthetic requirements.

The exemplary embodiments, with or without additional interlayers in the PDLC glass construction, also control total light transmission (LTa) and/or total energy transmission (TTS). As previously discussed, darkened glass substrates reflect and/or absorb unwanted visible light and/or energy transmission. These and other potential dark materials, layers, and/or substrates may be darkened to various degrees using known techniques for achieving desired levels of visibility with respect to the PDLC film.

These and other embodiments may further include any suitable number of interlayers in any arrangement, e.g., for reflecting and/or absorbing visible light and/or energy. For example and without limitation, the exemplary and other embodiments may include one or more infrared reflecting (IR) coatings/layers, low-emissivity (low-E) coatings/layers, ultraviolet (UV) blocking coatings/layers, anti-condensation layers, and/or paints. Among other things, the exemplary embodiments with or without the additional identified layers may allow less transmission of visible light and/or energy through the glass construction than in known PDLC glass for architectural applications.

The scope of this disclosure should not be limited to the details of construction or the arrangement of components set forth in the written description or figures. Those of ordinary skill in the art will understand the exemplary embodiments may be practised using other components, materials, structures, or designs consistent with this disclosure.

### BRIEF DESCRIPTION OF DRAWINGS

The features and advantages of the exemplary embodiments may be better and more completely understood with reference to the attached drawings in which corresponding reference symbols indicate corresponding parts, and in which:
FIG. 1 shows an exemplary embodiment of a PDLC glass construction;
FIG. 2 shows an exemplary embodiment of a PDLC film for a PDLC glass construction;
FIG. 3 shows an exemplary busbar arrangement for a PDLC glass construction; and,
FIG. 4 shows an exemplary embodiment of a PDLC glass construction as in Fig. 1, further incorporating a low-emissivity (low-E) layer.

### DETAILED DESCRIPTION OF EXEMPLARY EMBODIMENTS

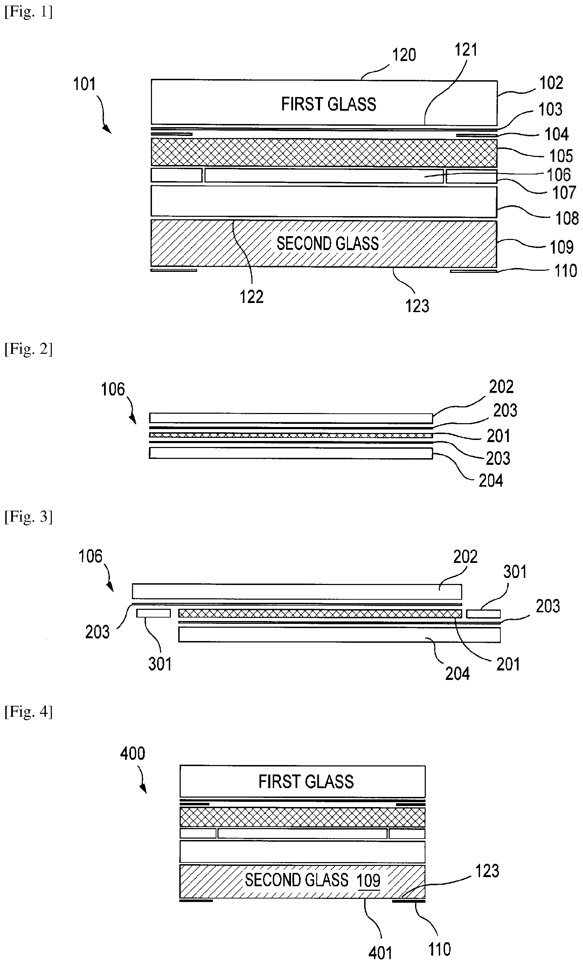

FIG. 1 shows an exemplary embodiment of a PDLC glass construction 101 according to this disclosure. First and second glass substrates may be a clear glass, a pale green glass, or dark green glass of soda-lime silicate glass, preferably manufactured by a float process. The first glass substrate layer 102, which can be an outside of a glass window, can comprise a coating layer 103 such as an infrared (IR) reflective coating, IR absorbing coating, or UV-cutting coating on a side of an inner surface 121. The second glass substrate layer 109, which can be a room side (inside) of a glass window, can also comprise such a coating layer. In a case that the first glass substrate layer 102 is placed at the outside of the glass window, the coating layer 103 may be an IR reflective coating or IR absorbing coating, because such coatings can help resist direct sunlight, debris, contaminants, and other damaging influences to a PDLC film layer 106. The first and the second glass substrate may comprise other coating layer(s) reflecting and/or absorbing visible light and/or energy.

The IR reflective coating may be formed from known materials such as silver, gold, tin oxide, zinc, silicon oxide, silicon nitride, or other comparable materials and/or combinations thereof. In an exemplary embodiment, IR reflective coating is silver based. The IR reflective coating may be applied by known methods such as magnetron sputtered vacuum deposition (MSVD), flow coating, spray coating, or other comparable processes.

As the intermediate film layers (105, 108), polyvinyl butyral resin ("PVB"), ethylene vinyl acetate resin ("EVA"), or polyurethane resin ("PU") can be used. In the exemplary embodiment shown by Fig. 1, the layer 105 is a privacy (dark) layer that provides a darkened layer on top of PDLC film layer 106 (detailed in Fig. 2). The layer 105 thus reduces visibility of an opaque PDLC material 201 (Fig. 2) when viewed through the top of the PDLC glass construction 101, i.e., down through surface 120. In addition, the layer 105 may reflect and/or absorb infrared (IR), ultraviolet (UV), or other forms of energy, e.g., that may cause failure of the PDLC switching function or permanent damage to the PDLC film layer 106 or PDLC material 201 (shown in Fig. 2). The other layer(s) may be a privacy (dark) layer(s).

As shown in Fig. 2, PDLC film layer 106 generally comprises PDLC material 201 sandwiched between a transparent conductive oxide (TCO) coating 203 on each of a first (top) and a second (bottom) polymer (polyethylene terephthalate (PET)) film layers 202, 204. As previously discussed, excess heat and/or radiation may cause, among other things, failure of the PDLC switching function or permanent damage to the PDLC film layer 106 or materials. The layer 105 with a privacy function reduces the amount of damaging heat and radiation that impinges the PDLC film layer 106, by reflecting and/or absorbing at least some of the heat and radiation. At least one of the first and the second polymer film layers 202, 204 may be a privacy (dark) layer(s).

A layer with a privacy function also decreases the overall amount of visible light and/or energy transmission through the PDLC glass construction 101, thereby decreasing the amount of visible light and/or energy that enters, for example, the passenger compartment of an automobile. This may obviate the need for a separate blind or shade to keep out or reduce unwanted visible light and/or radiation.

In an exemplary embodiment such as that shown in Fig. 1, the layer 105 with privacy function may be formed from PVB. The layer 105 with privacy function may also be formed from other suitable materials such as ethylene-vinyl acetate (EVA) or polyurethane (PU), or combinations thereof. Further, in the exemplary or other embodiments, the first glass substrate layer 102 or the first polymer film layer 202 may be a darkened layer(s) instead of, or in conjunction with a dark interlayer, for reducing visibility of an opaque PDLC material 201, protecting the PDLC film layer 106 from damaging effects from radiation and other energy, and/or reducing the amount of visible light and/or energy that passes, e.g., into the passenger compartment of an automobile.

Moreover, as previously discussed, other interlayers such as coated PET films, low-emissivity (low-E) layers, tinted layers, polarized layers, or other materials suitable for reducing visible light and/or energy transmission between a first glass substrate layer 102 and a PDLC film layer 106 may be used for the purposes disclosed above. The general selection and placement of materials in the PDLC glass construction 101 may vary based on the design and desired properties of particular glass constructions.

The exemplary embodiment of a PDLC glass construction 101 in Fig. 1 further addresses the shortcomings of current PDLC glass constructions by using a darkened substrate (darkened second glass substrate layer 109) on an inside ("bottom") portion of the PDLC glass construction 101. In the exemplary embodiment of Fig. 1, the darkened material is darkened second glass substrate layer 109 that reduces visibility of an opaque PDLC material 201 when viewed through bottom surface 123 of PDLC glass construction 101. The darkened glass substrate layer 109 may further reflect and/ or absorb unwanted visible light and/or energy that permeates through the upper layers of PDLC glass construction 101, and reduce the amount of visible light and/or energy that ultimately enters, e.g., the passenger compartment of an automobile. These properties are particularly useful for eliminating or reducing the need for a shade, blind, or other separate, physical component for accomplishing the same purposes.

In Fig. 1, darkened second glass substrate layer 109 is beneath a clear layer 108 which may be a typical layer in a PDLC glass construction for preventing the glass from rupturing during an impact. In the same or other embodiments, clear layer 108 may be substituted with a darkened layer such as a layer similar to layer 105. Clear layer 108 may formed of PVB, but may also be formed from other suitable materials such as EVA or PU, and these materials may also be darkened to achieve certain properties in particular designs of a PDLC glass construction.

Moreover, as previously discussed, other interlayers such as PET films, low-E layers, tinted layers, polarized layers, or other materials suitable for reducing visible light and/ or energy transmission between a first glass substrate layer 102 and a second glass substrate layer 109 may be used for the purposes disclosed above. The disclosed and comparable materials may be selected and positioned in any way suitable for use according to this disclosure.

Depending on, among other things, the number, type, and arrangement of interlayers in the PDLC glass construction, the materials used, and the darkness of dark layers and/or substrates, various LTa levels and/or TTS levels through the glass construction may be achieved. For the exemplary embodiments disclosed herein, LTa is preferably about 20% or less of the total visible solar light that arrives at the outside surface 120 of the first glass substrate layer 102 in daylight when the PDLC material 201 is in the ON state, as measured according to United Nations Economic Commission for Europe Regulation No. 43 (ECE-R43) definitions (standard illuminant A) for automotive safety glazing. More preferably, LTa is approximately 9% or less of the total visible solar light that arrives at the outside surface 120 of the first glass substrate layer 102 in daylight when the PDLC material 201 is in the ON state. Even more preferably, LTa for the exemplary embodiments is approximately 5% or less of the total visible solar light that arrives at the outside surface 120 of the first glass substrate layer 102 in daylight when the PDLC material 201 is in the ON state.

TTS for the exemplary embodiments is preferably about 25% or less of the total solar energy that arrives at the outside surface 120 of first glass substrate layer 102 in daylight when the PDLC material 201 is in the ON state, as measured according to the International Organization for Standardization Standard ISO 13837:2008, "Road vehicles -- Safety glazing materials -- Method for the determination of solar transmittance" (ISO 13837:2008). More preferably, TTS is approximately 18% or less of the total solar energy that arrives at the outside surface 120 of the first glass substrate layer 102 in daylight when the PDLC material 201 is in the ON state. Even more preferably, TTS for the exemplary embodiments is approximately 15% or less of the total solar energy that arrives at the outside surface 120 of the first glass substrate layer 102 in daylight when the PDLC material 201 is in the ON state.

Any exemplary or comparable embodiment of a PDLC glass construction as disclosed herein does not necessarily limit both LTa and TTS. Depending on preferences for a particular PDLC glass, either one or both of LTa and TTS may be limited. For example, in some applications light may be preferable but not heat. The number, type, and arrangement of interlayers, the materials used, and the darkness of dark layers, among other things, may be varied to achieve the optimal balance between visible light and energy transmission.

In general, the layers described herein are assembled according to known methods for manufacturing automotive safety glass products. For example, with respect to the embodiment described by Fig. 1, prefabricated and commercially available flat glass substrates are bent to desired dimensions, and PDLC films and other interlayers are stacked between the substrates in the exemplary configuration. The assembly is then processed according to known methods for forming final glass constructions.

In an exemplary method, a polymer sheet such as PVB is laid over a bent inner glass substrate, and a PDLC film is deposited on top of the clear layer. Another layer, which may be formed of PVB, may be laid over the PDLC film and covered by a bent outer glass substrate. The stack is then de-aired and laminated according to known industry processes. The laminated safety glass may then be autoclaved to soften the PVB material and "wet-out" the glass substrates i.e., contact all areas of the glass with the PVB, before the clear, laminated safety glass is cooled.

Exemplary materials of construction include, among other things, proprietary PDLC materials and films that are well-known and commercially available. In the exemplary embodiment, polymer film layers 202, 204 are formed from PET. In other embodiments, the polymer film layers may be formed from other polymers or comparable materials, or combinations thereof, consistent with this disclosure. TCO coatings 203 may be formed from, for example and without limitation, indium tin oxide (ITO), fluorine doped tin oxide (FTO), zinc oxide, or any combination of these or other transparent conducting oxides or materials consistent with this disclosure.

With continuing reference to the exemplary embodiment shown in Fig. 1, black paint 104 may be used alone or in conjunction with dark layers, e.g., layer 105, for reducing visibility of ends of PDLC film layer 106, ring 107 (discussed below), busbar 301 (Fig. 3, discussed below), and/or other features appearing through the outside surface 120 of first glass substrate layer 102. Black paint 104 may be applied, for example and without limitation, to surface 121 of outside first glass substrate layer 102, coating layer 103, and/or layer 105 according to known techniques such as silk screen printing and laser deposition.

Ring 107 compensates for the thickness of the PDLC film layer 106, which does not extend the full width of the exemplary PDLC glass construction 101. In an exemplary embodiment, PDLC film layer 106 and ring 107 are approximately 0.4 mm thick. In other embodiments, PDLC film layer 106 and ring 107 may be of other thicknesses consistent with particular designs for a PDLC glass construction. In one embodiment, ring 107 is formed from PVB, although other materials or combinations of materials, e.g., EVA, PU, may be used within the scope of this disclosure.

Fig. 1 further discloses black paint 110 on a periphery of surface 123 of second glass substrate layer 109 for reducing visibility of certain features, such as ends of PDLC film layer 106, ring 107, and busbar 301 (Fig. 3, discussed below), through surface 123 of second glass substrate layer 109. Black paint 110 may be applied in similar fashion as black paint 104, and may be applied in any location and by any method consistent with this disclosure.

With reference now to Fig. 3, an exemplary embodiment of PDLC film layer 106 includes one or more busbars 301 adjacent to PDLC material 201 for providing an applied electric field to PDLC material 201. Busbars 301 may comprise, for example and without limitation, copper tape attached to the TCO coatings 203 via known conductive glues or a lacquer such as a silver lacquer. In the exemplary embodiment two busbars 301 are respectively connected to the TCO coating 203 on each polymer (PET) film layer 202, 204. Each busbar 301 has a width such as to extend from the end of the PDLC material 201 to the end of respective polymer (PET) film layers 202, 204, which may be approximately 10 mm. As shown in Fig. 3, a gap should exist between PDLC film layer 106 and busbar 301, and busbar 301 should not extend beyond polymer (PET) film layer 202, 204. In other embodiments, one or more busbars 301 having different sizes may be formed in different orientations consistent with this disclosure.

An exemplary method for forming the disclosed configuration for a busbar 301 comprises cutting each polymer (PET) film layer 202, 204 to form areas for exposing busbar 301 to the opposite side polymer (PET) film layer 202 or 204 and respective TCO coating 203. Methods of cutting the polymer (PET) film layer 202, 204 may include laser cutting, die cutting, chemical etching, or any suitable means. The busbars 301 may then be applied to the exposed opposite surfaces of TCO coating(s) 203 using, for example and without limitation, conductive glue or lacquer. Other embodiments may include, for example, forming grooves in polymer (PET) film layers 202, 204 and/or layer 105 and/or clear layer 108, and bonding a busbar(s) 301 in the grooves and in contact with TCO coating(s) 203 using a conductive glue or lacquer.

The busbars 301 are connected to an AC voltage source (not shown) and may be further connected to a controlling switch (not shown). In exemplary embodiments, an applied voltage is between about 30V to 110V, although other voltages may be suitable depending on particular PDLC glass constructions. Exemplary embodiments require an alternating current (AC) to activate the switching function of the PDLC material 201.

With reference now to Fig. 4, another exemplary embodiment of a PDLC glass construction 400 is shown incorporating a low-E coating 401 between the second glass substrate layer 109 and black paint 110 of the PDLC glass construction 101 shown in Fig. 1. Low-E coating 401 may be used, among other things, to absorb energy (e.g., UV radiation) and act as an anti-condensation layer for preventing the occurrence of condensation on a surface 123 of the second glass substrate layer 109 while maintaining the transmission of visible light. Low-E coating 401 may also be used to prevent the "cold-wall" effect, wherein, for example, the temperature of a window drops while a vehicle sits idle and the temperature of an area next to the window correspondingly drops. The low-E coating 401 absorbs energy to prevent these phenomena.

Exemplary low-E coatings 401 are formed from, for example and without limitation, silver, or metal oxides and/or other dielectric materials. In an exemplary embodiment low-E coating 401 may be silver and is MSVD coated onto glass substrate surface 123. Other methods for depositing low-E coating 401 may include flow coating or other known techniques consistent with this disclosure.

Although certain example embodiments have been described in relation to various applications, the present disclosure is not limited thereto. The techniques of certain example embodiments may be applied to any glass and/or window-like application, for example automotive sunroofs and separation windows.

## Claims

1. A glass construction comprising:
a first glass substrate layer (102);
a second glass substrate layer (109);
a polymer dispersed liquid crystal (PDLC) film layer (106) between the first glass substrate layer (102) and the second glass substrate layer (109), the PDLC film layer comprising
a PDLC material layer (201),
a first polymer film layer (202) between the first glass substrate layer (102) and the PDLC material layer (201), and
a second polymer film layer (204) between the second glass substrate layer (109) and the PDLC material layer (201);
a first intermediate film layer (105) between the first glass substrate layer (102) and the PDLC film layer (106),
and
a second intermediate film layer (108) between the second glass substrate layer (109) and the PDLC film layer (106);
wherein at least one of the first glass substrate layer (102), the first intermediate film layer (105) and the first polymer film layer (202) is a darkened layer having a darkness for reducing the transmission of at least one of visible light and other energy, and
at least one of the second glass substrate layer (109), the second intermediate film layer (108) and the second polymer film layer (204) is a darkened layer having a darkness for reducing the transmission of visible light, optionally also other energy, to reduce the visibility of the PDLC material layer (201).

2. The glass construction according to claim 1 wherein the first and the second polymer film layers (202,204) are said darkened layers.

3. The glass construction according to claim 1 or 2 wherein the first intermediate film layer (105) is a said darkened layer.

4. The glass construction according to claim 1, 2 or 3 wherein the second glass substrate layer (109) is a said darkened layer.

5. The glass construction according to any one of the preceding claims wherein a total light transmission (LTa) through the glass construction, as measured according to United Nations Economic Commission for Europe Regulation No. 43 (ECE-R43) is approximately 20% or less of the total visible solar light that arrives at an outside surface of the first glass substrate layer (102) in daylight, when the PDLC film layer (106) is in an ON state.

6. The glass construction according to any one of the preceding claims wherein a total energy transmission (TTS) through the glass construction as measured according to International Organization for Standardization Standard ISO 13837:2008 (ISO 13837:2008) is approximately 25% or less of the total solar energy that arrives at an outside surface of the first glass substrate layer (102) in daylight when the PDLC film layer (106) is in an ON state.

7. The glass construction according to any one of claims 1 to 4 wherein a total light transmission (LTa) through the glass construction as measured according to United Nations Economic Commission for Europe Regulation No. 43 (ECE-R43) is approximately 20% or less of the total visible solar light that arrives at an outside surface of the first glass substrate layer (102) in daylight when the PDLC film layer (106) is in an ON state, and
a total energy transmission (TTS) through the glass construction as measured according to International Organization for Standardization Standard ISO 13837:2008 (ISO 13837:2008) is approximately 25% or less of the total solar energy that arrives at the outside surface of the first glass substrate layer (102) in daylight when the PDLC film layer (106) is in the ON state.

8. The glass construction according to any one of the preceding claims wherein the darkened layers have a dark gray hue.

9. The glass construction according to any one of the preceding claims wherein the first and second intermediate film layers (105,108) are made of polyvinyl butyral (PVB).

10. The glass construction according to claim 9, wherein at least one of the first and the second intermediate film layers (105,108) is a privacy PVB film layer which reflects and/or absorbs infrared (IR) or ultraviolet (UV) light.

11. The glass construction according to any one of the preceding claims wherein the glass construction is an automotive laminated glass window.

## Patentansprüche

1. Glaskonstruktion, die Folgendes umfasst:
eine erste Glassubstratschicht (102);
eine zweite Glassubstratschicht (109);
eine Filmschicht (106) aus Polymer-dispergierten Flüssigkristallen (PDLC) zwischen der ersten Glassubstratschicht (102) und der zweiten Glassubstratschicht (109), wobei die PDLC-Filmschicht Folgendes umfasst:
eine PDLC-Materialschicht (201),
eine erste Polymerfilmschicht (202) zwischen der ersten Glassubstratschicht (102) und der PDLC-Materialschicht (201), und
eine zweite Polymerfilmschicht (204) zwischen der zweiten Glassubstratschicht (109) und der PDLC-Materialschicht (201);
eine erste Zwischenfilmschicht (105) zwischen der ersten Glassubstratschicht (102) und der PDLC-Filmschicht (106)
und
eine zweite Zwischenfilmschicht (108) zwischen der zweiten Glassubstratschicht (109) und der PDLC-Filmschicht (106);
wobei zumindest eine aus der ersten Glassubstratschicht (102), der ersten Zwischenfilmschicht (105) und der ersten Polymerfilmschicht (202) eine gedunkelte Schicht ist, die eine Dunkelung zur Verringerung der Transmission von zumindest entweder sichtbarem Licht oder anderer Energie aufweist, und
zumindest eine aus der zweiten Glassubstratschicht (109), der zweiten Zwischenfilmschicht (108) und der zweiten Polymerfilmschicht (204) eine gedunkelte Schicht ist, die eine Dunkelung zur Verringerung der Transmission von sichtbarem Licht, gegebenenfalls auch anderer Energie aufweist, um die Sichtbarkeit der PDLC-Materialschicht (201) zu verringern.

2. Glaskonstruktion nach Anspruch 1, wobei die erste und die zweite Polymerfilmschicht (202, 204) gedunkelte Schichten sind.

3. Glaskonstruktion nach Anspruch 1 oder 2, wobei die erste Zwischenfilmschicht (105) eine gedunkelte Schicht ist.

4. Glaskonstruktion nach Anspruch 1, 2 oder 3, wobei die zweite Glassubstratschicht (109) eine gedunkelte Schicht ist.

5. Glaskonstruktion nach einem der vorangegangenen Ansprüche, wobei eine Gesamtlichttransmission (LTa) durch die Glaskonstruktion, gemessen laut Nr. 43 der Regelungen der Wirtschaftskommission für Europa der Vereinten Nationen (ECE-R43) etwa 20 % oder weniger des gesamten sichtbaren Sonnenlichts beträgt, das an einer äußeren Fläche der ersten Glassubstratschicht (102) im Tageslicht eintritt, wenn sich die PDLC-Filmschicht (106) in einem EIN-Zustand befindet.

6. Glaskonstruktion nach einem der vorangegangenen Ansprüche, wobei eine Gesamtenergietransmission (TTS) durch die Glaskonstruktion, gemessen laut dem ISO-Standard 13837:2008 (ISO 13837:2008) der Internationalen Organisation für Normung etwa 25 % oder weniger der gesamten Sonnenenergie beträgt, die an einer äußeren Fläche der ersten Glassubstratschicht (102) im Tageslicht eintritt, wenn sich die PDLC-Filmschicht (106) in einem EIN-Zustand befindet.

7. Glaskonstruktion nach einem der Ansprüche 1 bis 4, wobei eine Gesamtlichttransmission (LTa) durch die Glaskonstruktion, gemessen laut Nr. 43 der Regelungen der Wirtschaftskommission für Europa der Vereinten Nationen (ECE-R43) etwa 20 % oder weniger des gesamten sichtbaren Sonnenlichts beträgt, das an einer äußeren Fläche der ersten Glassubstratschicht (102) im Tageslicht eintritt, wenn sich die PDLC-Filmschicht (106) in einem EIN-Zustand befindet, und
eine Gesamtenergietransmission (TTS) durch die Glaskonstruktion, gemessen laut dem ISO-Standard 13837:2008 (ISO 13837:2008) der Internationalen Organisation für Normung etwa 25 % oder weniger der gesamten Sonnenenergie beträgt, die an der äußeren Fläche der ersten Glassubstratschicht (102) im Tageslicht eintritt, wenn sich die PDLC-Filmschicht (106) im EIN-Zustand befindet.

8. Glaskonstruktion nach einem der vorangegangenen Ansprüche, wobei die gedunkelten Schichten eine dunkelgraue Tönung aufweisen.

9. Glaskonstruktion nach einem der vorangegangenen Ansprüche, wobei die erste und die zweite Zwischenfilmschicht (105, 108) aus Polyvinylbutyral (PVB) bestehen.

10. Glaskonstruktion nach Anspruch 9, wobei zumindest eine aus der ersten und der zweiten Zwischenfilmschicht (105, 108) eine Privatsphären-PVB-Filmschicht ist, die infrarotes (IR) oder ultraviolettes (UV) Licht reflektiert und/oder absorbiert.

11. Glaskonstruktion nach einem der vorangegangenen Ansprüche, wobei die Glaskonstruktion ein laminiertes Automobilglasfenster ist.

## Revendications

1. Construction de verre comprenant :
une première couche de substrat de verre (102) ;
une deuxième couche de substrat de verre (109) ;
une couche de film de cristaux liquides dispersés dans un polymère (PDLC) (106) entre la première couche de substrat de verre (102) et la deuxième couche de substrat de verre (109), la couche de film de PDLC comprenant
une couche de matériau PDLC (201),
une première couche de film polymère (202) entre la première couche de substrat de verre (102) et la couche de matériau PDLC (201), et
une deuxième couche de film polymère (204) entre la deuxième couche de substrat de verre (109) et la couche de matériau PDLC (201) ;
une première couche de film intermédiaire (105) entre la première couche de substrat de verre (102) et la couche de film de PDLC (106),
et
une deuxième couche de film intermédiaire (108) entre la deuxième couche de substrat de verre (109) et la couche de film de PDLC (106) ;
dans laquelle au moins l'une de la première couche de substrat de verre (102), la première couche de film intermédiaire (105) et la première couche de film polymère (202) est une couche obscurcie ayant un obscurcissement pour réduire la transmission d'au moins l'une parmi la lumière visible et une autre énergie, et
au moins l'une de la deuxième couche de substrat de verre (109), la deuxième couche de film intermédiaire (108) et la deuxième couche de film polymère (204) est une couche obscurcie ayant un obscurcissement pour réduire la transmission de lumière visible, facultativement en outre, une autre énergie, pour réduire la visibilité de la couche de matériau PDLC (201).

2. Construction de verre selon la revendication 1 dans laquelle la première et la deuxième couche de film polymères (202,204) sont lesdites couches obscurcies.

3. Construction de verre selon la revendication 1 ou 2, dans laquelle la première couche de film intermédiaire (105) est ladite couche obscurcie.

4. Construction de verre selon la revendication 1, 2 ou 3, dans laquelle la deuxième couche de substrat de verre (109) est ladite couche obscurcie.

5. Construction de verre selon l'une quelconque des revendications précédentes, dans laquelle une transmission de lumière totale (LTa) à travers la construction de verre, telle que mesurée selon le règlement de la Commission économique pour l'Europe des Nations unies n° 43 (ECE-R43) est approximativement 20 % ou moins de la lumière solaire visible totale qui arrive au niveau d'une surface extérieure de la première couche de substrat de verre (102) sous la lumière du jour, lorsque la couche de film de PDLC (106) est dans un état activé.

6. Construction de verre selon l'une quelconque des revendications précédentes, dans laquelle une transmission d'énergie totale (TTS) à travers la construction de verre telle que mesurée selon l'Organisation internationale de normalisation ISO 13837:2008 (ISO 13837:2008) est approximativement 25 % ou moins de l'énergie solaire totale qui arrive au niveau d'une surface extérieure de la première couche de substrat de verre (102) sous la lumière du jour lorsque la couche de film de PDLC (106) est dans un état activé.

7. Construction de verre selon l'une quelconque des revendications 1 à 4, dans laquelle une transmission de lumière totale (LTa) à travers la construction de verre telle que mesurée selon le règlement de la Commission économique pour l'Europe des Nations unies n° 43 (ECE-R43) est approximativement 20 % ou moins de la lumière solaire visible totale qui arrive au niveau d'une surface extérieure de la première couche de substrat de verre (102) sous la lumière du jour, lorsque la couche de film de PDLC (106) est dans un état activé, et
une transmission d'énergie totale (TTS) à travers la construction de verre telle que mesurée selon l'Organisation internationale de normalisation ISO 13837:2008 (ISO 13837:2008) est approximativement 25 % ou moins de l'énergie solaire totale qui arrive au niveau d'une surface extérieure de la première couche de substrat de verre (102) sous la lumière du jour lorsque la couche de film de PDLC (106) est dans l'état activé

8. Construction de verre selon l'une quelconque des revendications précédentes, dans laquelle les couches obscurcies ont une teinte gris clair.

9. Construction de verre selon l'une quelconque des revendications précédentes, dans laquelle les première et deuxième couches de film intermédiaires (105,108) sont constituées de polyvinylbutyral (PVB).

10. Construction de verre selon la revendication 9, dans laquelle au moins l'une des première et deuxième couches de film intermédiaires (105,108) est une couche de film PVB de confidentialité qui réfléchit et/ou absorbe la lumière infrarouge (IR) ou ultraviolette (UV).

11. Construction de verre selon l'une quelconque des revendications précédentes, la construction de verre étant une vitre en verre feuilleté d'automobile.
